# EUROPEAN PATENT SPECIFICATION

(11) **EP 1 953 848 B1**
(45) Date of publication and mention of the grant of the patent: **03.03.2010**
(21) Application number: 08150023.3
(22) Date of filing: 03.01.2008
(51) Int. Cl.: H01M 2/02, H01M 2/04, H01M 2/06, H01M 2/10

(54) **Welding-type fixing cap and cell module equipped with same**
Durch Schweißung befestigte Kappe und damit ausgerüstetes Zellmodul
Capuchon de fixation de type soudure et module cellulaire équipé de celui-ci

(30) Priority: 02.02.2007 KR 20070011239
(43) Date of publication of application: 06.08.2008
(73) Proprietor: Samsung SDI Co., Ltd., Gyeonggi-do (KR)
(72) Inventor: Kim, Tae-yong c/o Legal & IP Team Samsung SDI Co., Ltd, Gyeonggi-do (KR); Han, Dae-won c/o Legal & IP Team Samsung SDI Co.,Ltd., Gyeonggi-do (KR)
(74) Representative: Grey, Ian Michael

(56) References cited:
- EP-A- 1 115 172
- JP-A- 2005 026 160
- JP-A- 2005 190 836
- JP-A- 2005 190 837
- US-A1- 2003 031 918
- US-A1- 2006 188 779

## Description

The present disclosure relates generally to batteries, and more particularly, to fixing caps weldable to both ends of a cylindrical battery, which are useful for assembling cell modules comprising a plurality of cylindrical batteries.

Cylindrical structures are used in a wide range of products encountered daily, for example as gas-pressure containers such as freon gas containers, butane gas canisters, oxygen tanks, etc., and in electric energy storage systems such as alkaline batteries, nickel-metal hydride cells, etc. Cylindrically-shaped batteries are easy to produce with desired capacities, and therefore, cylindrical batteries have been used as unit cells.

In order to obtain sufficient voltage and/or electric current, a plurality of cylindrical unit cells are generally connected in series and/or in parallel to form a cell module, which provides a sustained output of a desired voltage and/or current. Generally a plurality of cylindrical batteries is mounted in a case comprising one or more mounting grooves formed therein. Fixing caps are secured to both ends of the plurality of cylindrical batteries so as to fit into the mounting grooves, followed by assembling the plurality of the cylindrical batteries into the case. Here, each of the cylindrical batteries may be one unit cell or a cylindrical tandem battery comprising a plurality of unit cells coupled in series.

The fixing cap should have a sufficient thickness to maintain mechanical integrity, but not too great a thickness, which permits a significant proportion an electric current during welding leaks out through the fixing cap rather than passing to the external wall of the battery, resulting in a poor quality weld.

Accordingly, some embodiments disclosed herein solve one or more drawbacks, for example, providing a welding-type fixing cap exhibiting sufficient strength and/or reduced electric current leakage during contact-resistance welding to a battery, and a cell module comprising with the same.

Also, other embodiments provide a welding-type fixing cap which is suitable for manufacturing a cell module comprising a plurality of cylindrical batteries connected in series and/or in parallel, and a cell module equipped with the same.

A welding-type fixing cap for attachment to the ends of a cylindrical battery is known from JP 2005 190836A and comprises a cylindrical side wall having an axis, a flange extending radially outward from one end of the side wall, a welding lug formed on a surface of the flange facing away from the cylindrical side wall, said welding lug being configured to melt during a process in which the fixing cap is welded to the end of a cylindrical battery, and an opening in the side wall through which generated gas can be discharged, wherein the opening in the side wall intersects a plane that extends radially from the axis of the side wall through the welding lug.

A welding-type fixing cap according to the present invention is characterised by a welding lug-surrounding region formed on a surface of the flange facing the cylindrical side wall and substantially centered above the respective welding lug, the welding lug-surrounding region being thinner than the adjacent surface of the flange.

Another embodiment provides a cell module comprising a cell module comprising a frame comprising a plurality of mounting holes formed therein, and a cylindrical battery comprising a first end and a second end, and a welding-type fixing cap according to the invention welded to each of the first end and the second end, each fixing cap being coupled with a mounting hole.

Some embodiments provide a welding-type fixing cap comprising a ring-shaped side wall, a visor surface extending outward from one end of the side wall, a welding lug formed on the visor surface and operable to be melted during a welding process, and a cutting area formed in the side wall, and dimensioned and configured for discharging an internal gas, wherein a line through a centre point of the welding lug and normal to the side wall intersects at least a portion of a cutting area.

In some embodiments, at least two welding lugs are formed on the surface of the flange facing away from the cylindrical side wall and an opening is formed in the side wall corresponding to each welding lug. In some embodiments, the welding lug is operable and configured for welding using a contact resistance welding.

In some embodiments, a slot is formed in the flange to increase resistance between neighbouring welding lugs. In some embodiments, the slot extends in a radial direction.

In some embodiments, the opening in the cylindrical side wall and the surface of the flange are spaced by about 2mm or less. In some embodiments, the circumferential length of the opening(s) in the side wall comprise from about 40% to about 60% of the total circumferential length of the side wall. In some embodiments, an exterior common tangent line between a boundary surface of the opening and a boundary surface of the welding lug forms an angle of from about 20° to about 60° with a line normal to the flange surface passing through the centre of the opening.

Some embodiments further comprise a base wall closing the other end of the side wall remote from the flange. In some embodiments, a connection hole is formed in a central region of the base wall, dimensioned and configured to receive an external linear structure for coupling with a cylindrical structural body. In some embodiments, a screw thread is formed in an inner wall of the connection hole to couple the linear structure.

In some embodiments, two tangent lines are tangent to each of the openings on the side wall and substantially normal to the surface of the flange, two emission lines on the surface of the flange are normal to the side wall, each emission line intersecting a tangent line, and the welding lug is formed between the two emission lines.

These and/or other aspects and advantages will become apparent and more readily appreciated from the following description of certain preferred embodiments, taken in conjunction with the accompanying drawings.
FIG. 1A is a cross-sectional side view of a cylindrical battery coupled to an embodiment of a fixing cap.
FIG. 1B is a perspective view of the cylindrical battery and fixing cap of FIG. 1A installed in a frame.
FIG. 2A is a perspective view of an embodiment of a welding-type fixing cap.
FIG. 2B is a side view of an embodiment of a welding-type fixing cap.
FIG. 2C is a side view schematically showing certain proportions of a opening of the welding-type fixing cap of FIG. 2A.
FIG. 2D is a top partial cross-sectional view of the welding-type fixing cap of FIG. 2A.
FIG. 3A is a perspective view schematically showing a leakage channel for an electric current in an embodiment of a welding-type fixing cap.
FIG. 3B is a perspective view schematically showing a leakage channel for an electric current in another embodiment of a welding-type fixing cap.
FIG. 3C is a cross-sectional detail view of the welding lug-surrounding region in the welding-type fixing cap of FIG. 2A.
FIG. 4 is a perspective view of an embodiment of a configuration of a cell module in which an embodiment of a welding-type fixing cap is welded to a cylindrical battery.

Hereinafter, some preferred embodiments will be described with reference to the accompanying drawings. When a first element is connected and/or coupled to a second element, the first element may be not only directly connected and/or coupled to the second element, but also indirectly connected and/or coupled to the second element through one or more other elements. Elements not related to the features of interest are omitted for clarity. Like reference numerals refer to like elements throughout.

Relative positions of and/or proportions between components are described with reference to lines and/or surfaces indicated in some of the drawings. The relationships between the components, lines, and/or surfaces are based on the two-dimensional orientation illustrated in the referenced drawing and does not refer to a three-dimensional relationship between the components, lines, and/or surfaces.

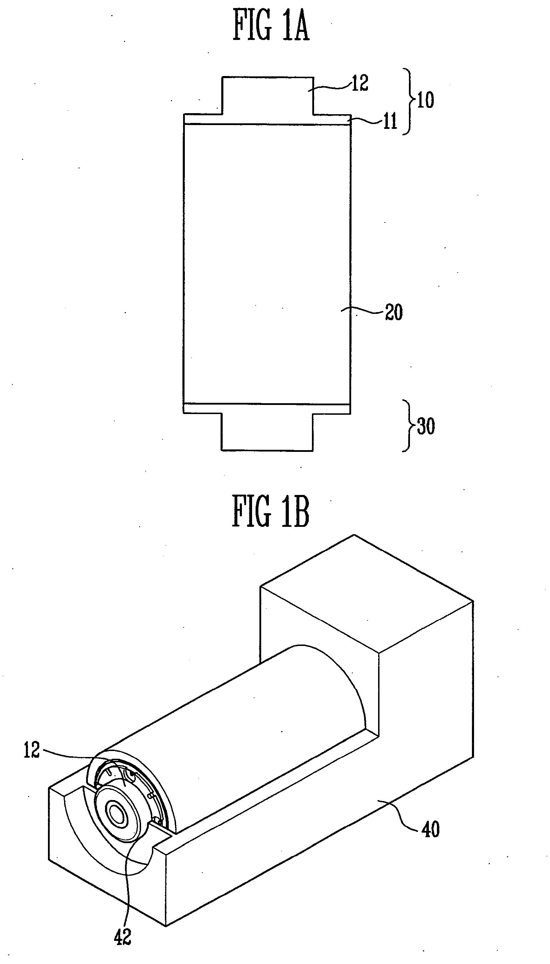

An embodiment of a case and a cylindrical battery using a fixing cap are shown in FIGS. 1A and 1B. FIG. 1A is a view of a cylindrical battery 20 on which is mounted at both ends fixing caps 10 and 30, each comprising a dish-shaped joint 12 formed formed on the end and configured to easily fit into a mounting coupler 42 of the case 40 (FIG. 1B). In embodiments in which an external wall of the cylindrical battery 20 comprises metal materials and the fixing caps 10 and 30 comprise metal materials, contact-resistance welding, is a convenient and economical method for coupling the fixing caps 10 and 30 to the ends of the battery 20.

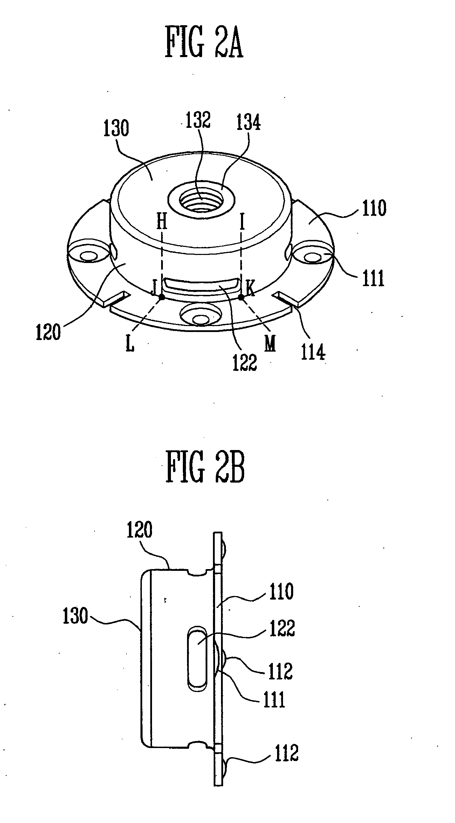

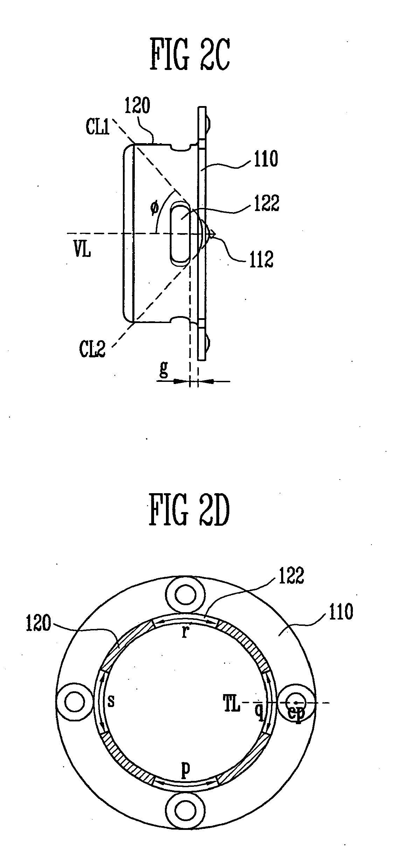

FIG. 2A is a perspective view of an embodiment of a welding-type fixing cap. FIG. 2B is a side view, FIG. 2C is another side view, and FIG. 2D is a partial cross-sectional top view of the embodiment of FIG. 2A. As can be seen in FIG. 2A, the welding-type fixing cap has a cap shape, and comprises a cylindrical side wall 120; a base wall 130 closing one end of the side wall 120; and a flange 110 extending outwards from the other end of the side wall 120, generally normal to the side wall 120 in the illustrated embodiment. A connection hole 132, dimensioned and configured for coupling an external linear structure to the welding-type fixing cap may be formed in a central region of the base wall 130. A screw thread 134 may be formed in an inner wall of the connection hole 132 as illustrated in FIG. 2A, which is useful in coupling the linear structures. Examples of external linear structures include power lines useful for connecting a battery in series and/or in parallel with one or more other cylindrical batteries.

As illustrated in FIG. 2B, a welding lug or portion 112 for contact-resistance welding is formed on the flange 110 on a surface opposite from the side wall 120. In a contact-resistance welding process, a welding rod is contacted with point on the flange 110 opposite to the welding lug 112. Then, a potential is applied to the welding rod causing an electric current to flow therefrom through the welding lug 112 to a point on an external wall of the cylindrical battery in direct contact with the welding lug 112. Contact resistance between the welding lug 112 and the external wall of the battery meltsa portion of the welding lug 112, thereby forming a weld therebetween.

Returning to FIG. 2A, a welding lug-surrounding region 111 may be formed on the flange 110 on the opposite face as the welding lug 112. In the illustrated embodiment, the welding lug-surrounding region 111 is generally circular and centered on the welding lug 112. Those skilled in the art will understand that other arrangements are used in other embodiments. The welding lug-surrounding region 111 is thinner than the adjacent portion of the flange 110 in the illustrated embodiment. As will be discussed in greater detail below, thinning the welding lug-surrounding region 111 increases the electrical resistance of the region, which improves the welding process.

To increase resistance of the welding-type fixing cap between the welding lugs 112, cutting grooves 114 may be formed in the flange 110 between two neighboring welding lugs 112, thereby reducing current flow to the neighboring, previously-welded welding lugs 112 during the welding process.

In the embodiment illustrated in FIGS. 2A and 2B, a opening 122 is formed in the side wall 120. In the illustrated embodiment, the opening 122 has a generally rectangular shape with rounded corners. The opening 122 permits the discharge of gases generated by the cylindrical battery, for example, generated in welding a nickel-metal hydride battery, compressed gas generated by damage to a lithium-ion battery, etc.

FIG. 2A also illustrates a geometric relationship between the opening 122 and the welding lug 112. Two tangent lines H and I on the side wall 120 are tangent to the ends of each opening 122, and normal to the flange 110. Each tangent line H and I intersects an emission line L and M, respectively, extend on the flange 110 normal to the side wall 120. The welding lug 112 is disposed between the emission lines L and M.

In a preferred embodiment illustrated in FIG. 2C, the opening 122 is formed so that a vertical line VL generally bisecting the welding-type fixing cap through the center of the opening 122 also intersects the welding lug 112. Exterior common tangent lines CL1 and CL2 defined by a boundary surface of the opening 122 and a boundary surface of the welding lug 112 form an angle ϕ with the vertical line VL. The angle ϕ between the vertical line VL and the exterior common tangent lines CL1 and CL2 is from about 20° to about 60°, preferably from about of 25° to about 35°. In some embodiments, a narrower angle leads to poor welding performance, while a wider angle leads to reduced mechanical strength of the fixing cap.

Referring to FIGS. 2C and 2D, in some embodiments, a distance g between the opening 122 and the flange 110 (FIG. 2C) is about 2 mm or less, and the total sum (p + q + r + s) (FIG. 2D) of circumferential lengths of all of the openings 122 is from about 40% to about 60% of the entire circumferential length of the side wall 120.

In the illustrated embodiment, a line TL drawn on the flange 110, normal to the side wall 120, and through a center point cp of the welding lug 112 intersects at least a portion of the opening 122, as shown in FIG. 2D. Accordingly, in some embodiments, a welding lug 112 is formed on a portion of the flange 110 that is distal to the side wall 120 and proximal to a opening 122.

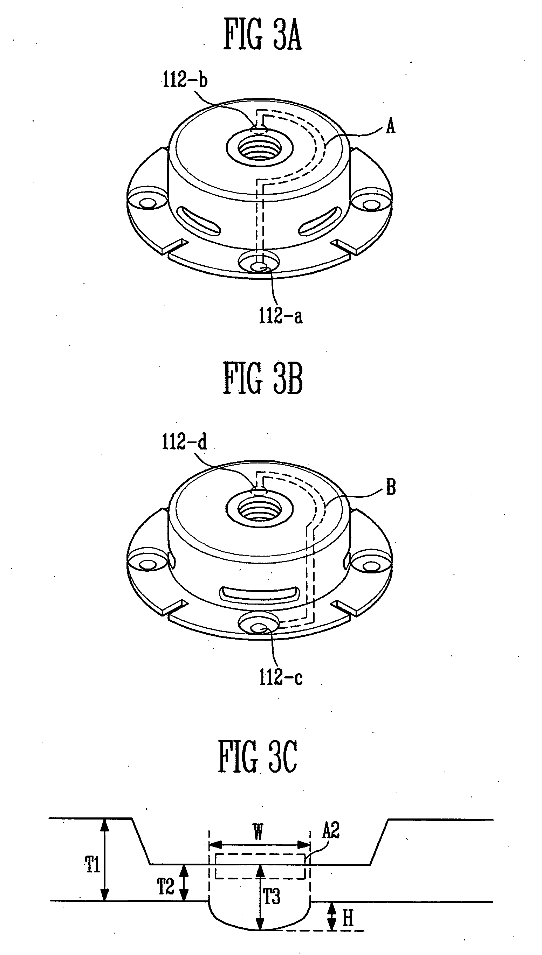

FIGS. 3A and 3B schematically illustrate the increase in resistance due to the presence of the opening 122. FIG. 3A shows a welding-type fixing cap in which the opening is not disposed as described above and illustrated in FIGS. 2A-2D. As shown in FIG. 3A, an electric current channel between two facing welding lugs 112-a and 112-b is represented by A. Resistance in the channel A is low because the channel A is relatively thick and wide. Accordingly, during the welding of the welding lug 112-a, a significant portion of the electric current from the welding rod leaks through previously welded welding lugs, for example, the welding lug 112-b, resulting in a deterioration in welding performance.

In contrast, an electric current channel B between two facing welding lugs 112-c and 112-d is illustrated in FIG. 3B. Resistance in the channel B is higher relative to channel A (FIG. 3A) because the width is thinner and the channel is longer due to the presence of the opening 122. Accordingly, the leakage of the electric current supplied from the welding rod during the welding process through the previously welded facing welding lugs is reduced, resulting in improved welding performance.

FIG. 3C schematically illustrates a cross-section of a portion of a flange 110, which provides increased resistance due to the presence of a welding lug-surrounding region 111. As shown in FIG. 3C, a thickness T2 of the welding lug-surrounding region 111 is thinner than a thickness T1 of the adjacent flange 110. In this case, the resistance in the welding lug-surrounding region 111 is increased in proportion with the reduced thickness, and therefore the leakage of electric current from the welding rod through the flange 110 is reduced.

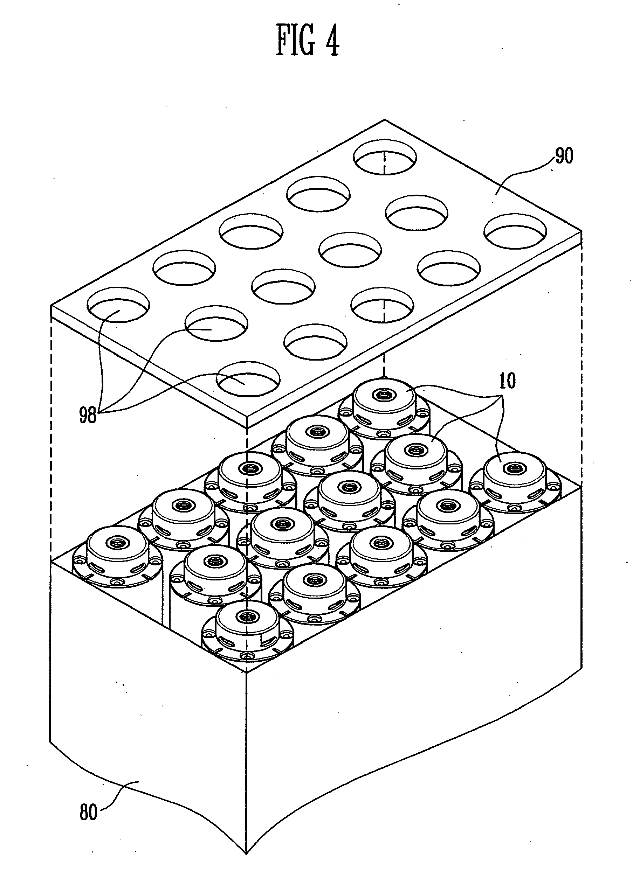

FIG. 4 shows in perspective an embodiment of a cell module in which a plurality of cylindrical batteries, to which an embodiment of the welding-type fixing cap 10 is coupled, is mounted in a case 80. Here, each of the plurality of cylindrical batteries may be one unit cell, and/or a cylindrical tandem battery comprising a plurality of unit cells is coupled in series. The fixing caps 10 are attached to both ends of each of the cylindrical batteries using, for example, a contact-resistance welding process as discussed above. Generally round mounting holes 98 are formed in an upper lid 90 and a lower bottom (not shown) of the case 80. The plurality of the cylindrical batteries may be mounted in the case 80 by fitting dish-shaped joints of the fixing caps 10, into the mounting holes 98. After the plurality of cylindrical batteries is mounted in the case 80, the cylindrical batteries are connected in series and/or in parallel by coupling cables to connection holes in the fixing caps 10 of each of the mounted cylindrical batteries, followed by performing a suitable wiring process.

As described above, embodiments of the welding-type fixing cap having sufficient mechanical strength and prevent leakage of electric current during a contact-resistance welding process, and, accordingly, is useful in manufacturing a cell module in which cylindrical batteries are connected in series and/or in parallel.

## Claims

1. A welding-type fixing cap for attachment to the ends of a cylindrical battery comprising a cylindrical side wall (120) having an axis, a flange (110) extending radially outward from one end of the side wall (120), a welding lug (112) formed on a surface of the flange (110) facing away from the cylindrical side wall (120), said welding lug (112) being configured to melt during a process in which the fixing cap is welded to the end of a cylindrical battery, and an opening (122) in the side wall (120) through which generated gas can be discharged, wherein the opening (122) in the side wall (120) intersects a plane that extends radially from the axis of the side wall (120) through the welding lug (112), **characterised by** a welding lug-surrounding region (111) formed on a surface of the flange (110) facing the cylindrical side wall (120) and substantially centered above the respective welding lug (112), the welding lug-surrounding region (111) being thinner than the adjacent surface of the flange (110).

2. The welding-type fixing cap according to claim 1, wherein at least two welding lugs (112) are formed on the surface of the flange (110) facing away from the cylindrical side wall (120) and an opening (122) is formed in the side wall (120) corresponding to each welding lug (112).

3. The welding-type fixing cap according to claim 1 or claim 2, wherein the welding lug (112) is operable and configured for welding using a contact resistance welding.

4. The welding-type fixing cap according to any preceding claim, wherein a slot (114) is formed in the flange (110) to increase resistance between neighbouring welding lugs (112).

5. The welding-type fixing cap according to claim 4, wherein the slot (114) extends in a radial direction.

6. The welding-type fixing cap according to any preceding claim, wherein the opening (122) in the cylindrical side wall (120) and the surface of the flange (110) are spaced by about 2mm or less.

7. The welding-type fixing cap according to any preceding claim, wherein the circumferential length of the opening(s) (122) in the side wall (120) comprise from 40% to about 60% of the total circumferential length of the side wall (120).

8. The welding-type fixing cap according to any preceding claim, wherein an exterior common tangent line between a boundary surface of the opening (122) and a boundary surface of the welding lug (112) forms an angle of from 20° to 60° with a line normal to the flange surface passing through the centre of the opening (122).

9. The welding-type fixing cap according to any preceding claim, further comprising a base wall (130) closing the other end of the side wall (120) remote from the flange (110).

10. The welding-type fixing cap according to claim 9, wherein a connection hole (132) is formed in a central region of the base wall (130), dimensioned and configured to receive an external linear structure for coupling with a cylindrical structural body.

11. The welding-type fixing cap according to claim 10, wherein a screw thread (134) is formed in an inner wall of the connection hole (132) to couple the linear structure.

12. The welding-type fixing cap according to any preceding claim, wherein two tangent lines are tangent to each of the openings (122) in the side wall (120) and substantially normal to the surface of the flange (110), two emission lines on the surface of the flange (110) are normal to the side wall (120), each emission line intersecting a tangent line, and the welding lug (112) is formed between the two emission lines.

13. A cell module comprising a frame (80) comprising a plurality of mounting holes (98) formed therein, and a cylindrical battery (20) comprising a first end and a second end, and a welding-type fixing cap according to any preceding claim welded to each of the first end and the second end, each fixing cap being coupled with a mounting hole (98).

## Patentansprüche

1. Befestigungskappe der schweißbaren Art zum Anbringen an den Enden einer zylindrischen Batterie, wobei die Befestigungskappe eine zylindrische Seitenwand (120) mit einer Achse, einen Flansch (110), der sich von einem Ende der Seitenwand (120) radial nach außen erstreckt, eine Schweißnase (112), die auf einer Fläche des Flansches (110) ausgebildet ist, die von der zylindrischen Seitenwand (120) abgewandt ist, wobei die Schweißnase (112) darauf eingerichtet ist, während eines Verfahrens zu schmelzen, in dem die Befestigungskappe an das Ende einer zylindrischen Batterie geschweißt wird, und eine Öffnung (122) in der Seitenwand (120) umfasst, durch die erzeugtes Gas abgelassen werden kann, wobei die Öffnung (122) in der Seitenwand (120) eine Ebene durchschneidet, die sich von der Achse der Seitenwand (120) durch die Schweißnase (112) erstreckt, **gekennzeichnet durch** einen die Schweißnase umgebenden Bereich (111), der auf einer Fläche des Flansches (110) ausgebildet ist, die der zylindrischen Seitenwand (120) zugewandt und im Wesentlichen über der jeweiligen Schweißnase (112) zentriert ist, wobei der die Schweißnase umgebende Bereich (111) dünner als die angrenzende Fläche des Flansches (110) ist.

2. Befestigungskappe der schweißbaren Art nach Anspruch 1, wobei mindestens zwei Schweißnasen (112) auf der Fläche des Flansches (110) ausgebildet sind, die von der zylindrischen Seitenwand (120) abgewandt ist, und eine Öffnung (122) in der Seitenwand (120) ausgebildet ist, die jeder Schweißnase (112) entspricht.

3. Befestigungskappe der schweißbaren Art nach Anspruch 1 oder 2, wobei die Schweißnase (112) zum Schweißen unter Anwendung eines Kontaktwiderstandschweißverfahrens operierbar und eingerichtet ist.

4. Befestigungskappe der schweißbaren Art nach einem der vorhergehenden Ansprüche, wobei ein Schlitz (114) in dem Flansch (110) ausgebildet ist, um den Widerstand zwischen benachbarten Schweißnasen (112) zu erhöhen.

5. Befestigungskappe der schweißbaren Art nach Anspruch 4, wobei sich der Schlitz (114) in einer radialen Richtung erstreckt.

6. Befestigungskappe der schweißbaren Art nach einem der vorhergehenden Ansprüche, wobei die Öffnung (122) in der zylindrischen Seitenwand (120) und die Fläche des Flansches (110) um etwa 2 mm oder weniger beabstandet sind.

7. Befestigungskappe der schweißbaren Art nach einem der vorhergehenden Ansprüche, wobei die Umfangslänge der Öffnung(en) (122) in der Seitenwand (120) von 40 % bis etwa 60 % der Gesamtumfangslänge der Seitenwand (120) umfasst.

8. Befestigungskappe der schweißbaren Art nach einem der vorhergehenden Ansprüche, wobei eine äußere gemeinsame Tangentenlinie zwischen einer Grenzfläche der Öffnung (122) und einer Grenzfläche der Schweißnase (112) mit einer Linie, die senkrecht zu der Flanschfläche ist und die durch die Mitte der Öffnung (122) verläuft, einen Winkel von 20° bis 60° bildet.

9. Befestigungskappe der schweißbaren Art nach einem der vorhergehenden Ansprüche, die weiterhin eine Basiswand (130) umfasst, die das andere Ende der Seitenwand (120) verschließt, das sich entfernt von dem Flansch (110) befindet.

10. Befestigungskappe der schweißbaren Art nach Anspruch 9, wobei ein Verbindungsloch (132) in einem zentralen Bereich der Basiswand (130) ausgebildet ist, das so bemessen und darauf eingerichtet ist, eine äußere lineare Struktur zur Kopplung mit einem zylindrischen Strukturkörper aufzunehmen.

11. Befestigungskappe der schweißbaren Art nach Anspruch 10, wobei ein Schraubengewinde (134) in einer Innenwand des Verbindungslochs (132) ausgebildet ist, um die lineare Struktur zu koppeln.

12. Befestigungskappe der schweißbaren Art nach einem der vorhergehenden Ansprüche, wobei zwei Tangentenlinien jede der Öffnungen (122) in der Seitenwand (120) tangieren und im Wesentlichen zu der Fläche des Flansches (110) senkrecht sind, zwei Emissionslinien auf der Fläche des Flansches (110) zu der Seitenwand (120) senkrecht sind, wobei jede Emissionslinie eine Tangentenlinie durchschneidet, und die Schweißnase (112) zwischen den zwei Emissionslinien ausgebildet ist.

13. Zellmodul, das einen Rahmen (80), der mehrere darin ausgebildete Montagelöcher (98) umfasst, und eine zylindrische Batterie (20), die ein erstes Ende und ein zweites Ende umfasst, und eine Befestigungskappe der schweißbaren Art nach einem der vorhergehenden Ansprüche umfasst, die an jeweils das erste Ende und das zweite Ende geschweißt ist, wobei jede Befestigungskappe mit einem Montageloch (98) gekoppelt ist.

## Revendications

1. Capsule du type à fixation par soudage destinée à être montée aux extrémités d'une pile cylindrique, comprenant une paroi latérale (120) cylindrique qui possède un axe, une collerette (110) qui s'étend radialement vers l'extérieur depuis une extrémité de la paroi latérale (120), un plot de soudage (112) formé sur une surface de la collerette (110) et dirigé à l'opposé de la paroi latérale cylindrique (120), ledit plot de soudage (112) étant configuré pour fondre au cours d'un processus dans lequel la capsule à fixer est soudée à l'extrémité d'une pile cylindrique, et une ouverture (122) ménagée dans la paroi latérale (120) par laquelle le gaz généré peut s'échapper, l'ouverture (122) de la paroi latérale (120) coupant un plan qui s'étend radialement depuis l'axe de la paroi latérale (120) en passant par le plot de soudage (112), **caractérisée par** une zone entourant le plot de soudage (111) formée sur une surface de la collerette (110) qui fait face à la paroi latérale (120) cylindrique et qui est sensiblement centrée au-dessus du plot de soudage (112) respectif, la zone entourant le plot de soudage (111) ayant une épaisseur inférieure à celle de la surface adjacente de la collerette (110).

2. Capsule du type à fixation par soudage selon la revendication 1, dans laquelle au moins deux plots de soudage (112) sont formés sur la surface de la collerette (110) et dirigés à l'opposé de la paroi latérale (120) cylindrique et une ouverture (122) correspondant à chaque plot de soudage (112) est formée dans la paroi latérale (120).

3. Capsule du type à fixation par soudage selon la revendication 1 ou la revendication 2, dans laquelle le plot de soudage (112) peut fonctionner et est configuré pour le soudage en utilisant un soudage de contacts par résistance.

4. Capsule du type à fixation par soudage selon l'une quelconque des revendications précédentes, dans laquelle une encoche (114) est formée dans la collerette (110) afin d'augmenter la résistance entre des plots de soudage (112) voisins.

5. Capsule du type à fixation par soudage selon la revendication 4, dans laquelle l'encoche (114) s'étend dans une direction radiale.

6. Capsule du type à fixation par soudage selon l'une quelconque des revendications précédentes, dans laquelle la distance entre l'ouverture (122) de la paroi latérale (120) cylindrique et la surface de la collerette (110) est d'environ 2 mm ou moins.

7. Capsule du type à fixation par soudage selon l'une quelconque des revendications précédentes, dans laquelle la longueur circonférentielle de la ou des ouvertures (122) de la paroi latérale (120) représente de 40% à environ 60% de la longueur circonférentielle totale de la paroi latérale (120).

8. Capsule du type à fixation par soudage selon l'une quelconque des revendications précédentes, dans laquelle une tangente extérieure commune entre une surface limite de l'ouverture (122) et une surface limite du plot de soudage (112) forme un angle de 20° à 60° avec une ligne perpendiculaire à la surface de la collerette et passant par le centre de l'ouverture (122).

9. Capsule du type à fixation par soudage selon l'une quelconque des revendications précédentes, comprenant en plus une paroi d'embase (130) qui ferme l'autre extrémité de la paroi latérale (120) éloignée de la collerette (110).

10. Capsule du type à fixation par soudage selon la revendication 9, dans laquelle un trou de liaison (132), dimensionné et configuré pour recevoir une structure linéaire extérieure destinée à l'accouplement avec un corps structurel cylindrique, est formé dans une zone centrale de la paroi d'embase (130).

11. Capsule du type à fixation par soudage selon la revendication 10, dans laquelle un filetage (134) est formé dans une paroi interne du trou de liaison (132) afin d'accoupler la structure linéaire.

12. Capsule du type à fixation par soudage selon l'une quelconque des revendications précédentes, dans laquelle deux lignes tangentes sont tangentes à chacune des ouvertures (122) de la paroi latérale (120) et sensiblement perpendiculaires à la surface de la collerette (110), deux lignes d'émission à la surface de la collerette (110) sont perpendiculaires à la paroi latérale (120), chaque ligne d'émission coupant une tangente, et le plot de soudage (112) est formé entre les deux lignes d'émission.

13. Module d'accumulateur, comprenant un châssis (80) dans lequel est formée une pluralité de trous de montage (98) et une pile cylindrique (20) comprenant une première extrémité et une deuxième extrémité et une capsule du type à fixation par soudage selon l'une quelconque des revendications précédentes soudée à chacune des première et deuxième extrémités, chaque capsule à fixer étant associée à un trou de montage (98).
